# EUROPEAN PATENT APPLICATION

(11) **EP 1 120 850 A1**
(43) Date of publication of application: **01.08.2001**
(21) Application number: 99940549.1
(22) Date of filing: 27.08.1999
(51) Int. Cl.: H01M 10/40

(54) **LITHIUM SECONDARY CELL AND DEVICE**

(30) Priority: 31.08.1998 JP 24469798
(71) Applicant: Hitachi, Ltd., Chiyoda-ku, Tokyo 101-8010 (JP)
(72) Inventor: NISHIMURA, Katsunori, Hitachi, Ltd., Hitachi-shi, Ibaraki 319-1292 (JP); YOSHIKAWA, Masanori, Hitachi, Ltd., Hitachi-shi, Ibaraki 319-1292 (JP); ANDO, Hisashi, Hitachi, Ltd., Hitachi-shi, Ibaraki 319-1292 (JP); MURANAKA, Yasushi, Hitachi, Ltd., Hitachi-shi, Ibaraki 319-1292 (JP); NISHIMURA, Shin, Hitachi, Ltd., Hitachi-shi, Ibaraki 319-1292 (JP)
(74) Representative: Strehl Schübel-Hopf & Partner
(86) International application number: JP9904667
(87) International publication number: WO0013251

(57) **Abstract**

A lithium secondary battery which has a long life and a low level of self-discharge when used in an environment at high temperatures. The lithium secondary battery comprises a cathode; an anode; and an electrolyte solution containing lithium ions, which further comprises a capturing agent having a function to capture, by absorption, binding, or adsorption, impurities or by-products which are produced in the lithium secondary battery.

## Description

### FIELD OF THE INVENTION

The present invention relates to a non-aqueous electrolyte secondary battery, particularly a lithium secondary battery, and also to consumer and industrial apparatus (such as electric car and electric power storage system) equipped therewith.

### BACKGROUND OF THE INVENTION

Non-aqueous electrolyte secondary batteries typified by lithium secondary batteries have found use for consumer apparatus (such as video cameras, portable telephones, notebook computers, and portable information terminals) because of their higher energy density than lead storage batteries and nickel-cadmium batteries. Recently, lithium secondary batteries are attracting attention as batteries for electric cars and electric power storage from the view point of preventing air pollution and using electric power effectively. Those lithium secondary batteries which are used for consumer apparatus (such as notebook computer and portable information terminal) and industrial apparatus (such as electric power storage system and electric car) are required to have good cycle characteristics at high temperatures because they are sometimes used at 40-80°C. For example, lithium secondary batteries containing LiMn₂O₄ as the cathode active material are poor in cycle life because manganese leaches out from the cathode active material. One known way to prevent manganese from leaching out is to partly substitute manganese atoms in the crystals of the cathode active material by oxygen atoms or other elements, thereby forming stable crystals of spinel structure, or to cover the surface of LiMn₂O₄ particles with a protective film of lithium-boron glass or organic compound. (The former is described in Journal of Electrochemical Society, vol. 143, p. 178, 1996; 191th Meeting of the Electrochemical Society, Lecture No. 84; USP 5,674,645. The latter is described in Journal of Power Sources, vol. 104, 1997, pp. 13-25; USP 5,695,887.)

Further, Japanese Patent Application Laid-Open No.5-283061 discloses that an output electric power density, a discharge capacity and cycle characteristics of a lithium secondary battery can be improved by using a composite of carbon particles and carbon fiber as a carbon material for the anode.

An object of the present invention is to provide a lithium secondary battery which has a long life and a small self-discharge rate even when it is used at high temperatures.

### DISCLOSURE OF THE INVENTION

The outline of the present invention is as follows.
1. A lithium secondary battery comprises a cathode; an anode; and an electrolyte solution containing lithium ions, which comprises a capturing agent having a function to capture, by absorption, binding, or adsorption, impurities or by-products which are produced in the lithium secondary battery.
2. A lithium secondary battery comprises a cathode; an anode; an electrolyte solution containing lithium ions; and a separator, wherein any one of the cathode, the anode, the electrolyte solution containing lithium ions and the separator comprises a capturing agent having a function to capture, by absorption, binding, or adsorption, impurities or by-products which are produced in the lithium secondary battery.

In either of the above item (1) or the above item (2), it is preferable that the capturing agent has a function to capture, by absorption, binding, or adsorption, impurities or by-products containing cations, and that the capturing agent has a function to capture, by absorption, binding, or adsorption, impurities or by-products containing fluoride ions, and that the capturing agent has a function to capture, by absorption, binding, or adsorption, cobalt ions, nickel ions, manganese ions, copper ions, or aluminum ions.

Further, it is preferable that the capturing agent is an absorbent or adsorbent having a specific surface area no smaller than 1000 m²/g, and that the capturing agent is a carbonaceous material having pores or interstices. Futher, it is preferable that the capturing agent is an absorbent or adsorbent composed of an acicular or fibrous substance.

Furthermore, it is preferable that the capturing agent contains a complexing agent and is fixed to the surface of carbon or separator by chemical bonding, and that the capturing agent contains one or more complexing agents or derivatives of said complexing agents selected from the group consisting of acetylacetone, ethylenediaminetetraacetic acid, 1,10-phenathroline, 1,2-bis-(diphenylsulfine)ethane, 2,2'-bipyridine, and phthalocyanine, and that the capturing agent contains at least one kind of element selected from the group consisting of alkali metal, alkaline earth metal, silicon, aluminum, and titanium, and that the capturing agent is a zeolite having a pore diameter of 0.3-0.5 nm, and that the capturing agent has a porous surface or pore structure.

Further, it is preferable that the capturing agent forms a salt with fluoride ions, and that the capturing agent contains at least one element selected from the group consisting of alkaline earth metal, silver, or tin.

Further, it is preferable that the capturing agent is present in the cathode active material or anode active material or on the surface of the separator or the battery can wall, and that the capturing agent is contained in a solid electrolyte or gel electrolyte which permits lithium ions to permeate.

An apparatus equipped with the lithium secondary battery in accordance with the present invention has a long lifetime even in a high-temperature environment. Particularly, in an electric vehicle comprising an electric power system having a lithium secondary battery; and an electric motor driven by electric energy supplied from the electric power system, the electric vehicle mounting the lithium secondary battery in accordance with the present invention can run at a high output power and for a long time.

Lithium secondary batteries after conducting high-temperature cycle test were disassembled to perform examination. From the examination results, the deterioration of lithium secondary batteries at high temperatures were caused by (1) that the cations other than lithium ions dissolved in the electrolyte solution from the positive electrode, the battery tub and the current collector were adsorbed onto or reduced and then deposited onto the surface of the anode to inhibit charging and discharging at the anode, and (2) that hydrogen fluoride produced by decomposition of the electrolyte corroded the cathode active material to reduce capacity of the cathode.

The metals causing the phenomenon of (1) include manganese, cobalt, nickel, and iron which have leached out of the cathode active material; nickel, iron, and aluminum which have leached out of the battery casing; and aluminum, copper, and nickel which have leached out of the current collector and electrode tab. The reaction in (2) causes metals such as manganese, cobalt, nickel, and iron to leach out of the cathode active material, thereby further decreasing the capacity of the negative electrode due to the mechanism of (1).

The lithium secondary battery of the present invention is constructed as explained in the following. The positive electrode of the lithium secondary battery consists of a cathode active material, conductor, binder, and current collector. The cathode active material used in the present invention is a lithium-metal composite oxide, with or without its metal ions partly replaced by different elements. It is represented by such chemical formulas as LiCoO₂, LiNiO₂, LiMn₂O₄, LiMnO₂, Fe₂(SO₄)₃, and LiFeO₂. Since the cathode active material usually has a high resistance, it is incorporated with carbon powder as a conductor so as to remedy its low electrical conductivity. The cathode active material and the conductor, both of which are powder, are mixed with a binder and the resulting mixture is stuck to the current collector. The conductor may be natural graphite, artificial graphite, coke, carbon black, or amorphous carbon. The conductor should preferably have an average particle diameter smaller than that of the cathode active material powder, so that the conductor readily sticks to the surface of the cathode active material particles. Thus, a small amount of conductor reduces the electrical resistance of the positive electrode. Therefore, the conductor should be selected according to the average particle diameter of the cathode active material. The current collector for the positive electrode is not specifically restricted so long as it hardly dissolves in the electrolyte solution. Aluminum foil is commonly used. The positive electrode is formed from a mixture (in the form of slurry) of cathode active material, conductor, binder, and organic solvent, which is applied to the current collector by using a doctor blade. Alternatively, the positive electrode is formed by dipping the current collector in the slurry. The positive electrode formed in this way is heated to remove the organic solvent and then roll-pressed so that the cathode active mixture comes into close contact with the current collector.

The negative electrode of the lithium secondary battery consists of an anode active material, binder, and current collector. In the present invention, the anode active material may be graphite or amorphous carbon which electrochemically occludes and releases lithium; however, it is not specifically restricted so long as it is capable of charging and discharging. The anode active material is usually in the form of powder. Therefore, it is mixed with a binder and the resulting mixture is stuck to the current collector. The current collector of the anode active material should be formed from a metal which hardly alloys with lithium; copper foil is commonly used. The negative electrode is formed from a mixture (in the form of slurry) of anode active material, binder, and organic solvent, which is applied to the current collector by doctor coating or dipping. The negative electrode formed in this way is heated to remove the organic solvent and then roll-pressed.

Between the positive and negative electrodes prepared as mentioned above is interposed a separator of polymer, such as polyethylene, polypropylene, and polytetrafluoroethylene. The space between the separator and the electrode is completely filled with an electrolyte solution, so as to ensure electrical insulation and transfer of lithium ions between the positive electrode and the negative electrode. In the case of a cylindrical battery, the separator is placed between the positive electrode and the negative electrode and the resulting assembly is wound up. The separator may be replaced by a sheet of polymer (such as polyethylene oxide and polyvinylidene fluoride) which is impregnated with a lithium salt or a non-aqueous electrolyte solution. This separator functions as a solid electrolyte or gel electrolyte. If the electrode is wound around two axes, the resulting battery will be an elliptic cylinder. For square batteries, the positive electrodes and negative electrodes cut in rectangle are placed on top of the other, with a separator (of polymer such as polyethylene, polypropylene, and polytetrafluoroethylene) interposed between them. The present invention has nothing to do with the construction of the electrode; therefore, the electrode may take on any form.

The electrodes prepared as mentioned above are placed in a battery can made of aluminum, stainless steel, or nickel-plated steel, and then they are impregnated with an electrolyte solution. The battery can may be cylindrical, flat elliptic, or square. Any shape will do so long as it fits the electrodes. The electrolyte solution that can be used in the present invention is exemplified by a solution of lithium hexafluorophosphate (LiPF₆) or lithium tetrafluoroborate (LiBF₄) (as an electrolyte) dissolved in a mixed solvent of ethylene carbonate or propylene carbonate and dimethyl carbonate, diethyl carbonate, or ethyl methyl carbonate. The present invention is not restricted by the kind of solvent and electrolyte and the mixing ratio of solvent; therefore, any other electrolyte solution may be used.

The lithium secondary battery constructed as mentioned above is subject to deterioration in cycle characteristics at high temperatures and to increase in self-discharge. In order to overcome this disadvantage, the present inventors carried out a series of researches which led to the development of a new technology as explained in the following.

This new technology employs a capturing agent. The first function of the capturing agent is to capture cations (such as manganese ions, cobalt ions, nickel ions, iron ions, copper ions, and aluminum ions) by adsorption, complexing, reduction, or precipitation before they reach the negative electrode. The second function of the capturing agent is to selectively capture those cations which decrease the capacity of the negative electrode by adsorption, complexing, reduction, or precipitation even after such cations have reached the negative electrode. The third function of the capturing agent is to capture a trace amount of hydrogen fluoride contained in the electrolyte (such as lithium hexafluorophosphate and lithium tetrafluoroborate) by neutralization, ion exchange, or reaction to form slightly soluble fluorides.

The capturing agent that can be used in the present invention is a carbonaceous material having a large specific surface area. It can capture and remove impurities (cations and fluoride ions) that have been evolved in the battery. An example of such carbonaceous material is activated carbon having a specific surface area no less than 1000 m²/g and a pore volume no less than 0.1 cc/g. If this activated carbon is held on or in the separator and the positive and negative electrodes, it is possible to keep the anode active material away from cations or fluoride ions which deteriorate the battery performance. The present inventors carried out an experiment to see how the ability of carbon powder to adsorb cations depends on the specific surface area of carbon powder. In this experiment, samples of carbon powder varying in specific surface area were dipped in an organic solvent containing any of Mn²⁺, Co²⁺, Ni²⁺, Fe²⁺, and F⁻ ions, and the amount of ions adsorbed by the carbon powder was measured. It was found that the amount of adsorption of metal ions by activated carbon having a specific surface area no less than 1000 m²/g and a pore volume no less than 0.1 cc/g is 10 to 1000 times that of graphite or amorphous carbon which is used for the anode active material or cathode active material. The activated carbon produces its effect intended in the present invention so long as it has a specific surface area no less than 1000 m²/g. However, activated carbon having an excessively large specific surface area has the disadvantage of increasing the viscosity of the mixture (slurry) of electrode active material, activated carbon, and solvent because of its increased solvent absorption. A viscous slurry hampers coating operation. Consequently, the activated carbon used in the present invention should preferably have a specific surface area ranging from 1000 to 10000 m²/g. The activated carbon having a pore volume no less than 0.1 cc/g produces the effect of removing impurities which have been evolved in the battery. A desirable pore volume ranges from 0.1 to 10 cc/g. The activated carbon should have a particle diameter equal to or smaller than that of the active material so that it is easily packed into interstices between the particles of the active material. This leads to a reduction in battery volume and an increase in battery energy density. An ordinary active material has a specific surface area of 0.1-10 m²/g and a particle diameter of 0.1-100 µm. In the case where such an active material is used in combination with activated carbon, it is possible to remarkably improve the cycle characteristics of the lithium secondary battery at high temperatures by employing an activated carbon having a specific surface area of 1000-3000 m²/g, a pour volume of 0.1-2 cc/g, and a particle diameter no larger than 20 µm. The activated carbon black may be substituted with Ketjen black which has a specific surface area no less than 1000 m²/g and functions in the same way as the activated carbon. The scope of the present invention is not restricted to activated carbon and Ketjen black; any carbonaceous material will be able to remove impurities from the battery so long as it has a high specific surface area attributable to pore or interstices. Examples of other capturing agents of inorganic material include silica gel, zeolite, active alumina, titania, porous alumina (prepared from aluminum by electrolytic oxidation), and basic oxides (such as MgO, CaO, SrO, and BaO). They capture and remove impurities (such as cations and fluoride ions) which are evolved in the battery. It is desirable that silica gel, zeolite, active alumina, titania, and porous alumina have a specific surface area no less than 1000 m²/g so that they sufficiently adsorb impurities.

The present inventors investigated the way of preventing the reduction and precipitation of cations on the anode active material. It was found that the object is achieved if the negative electrode is incorporated with a capturing agent which is fibrous carbon or an aggregate of fibrous carbon having an aspect ratio no smaller than 2. This capturing agent selectively captures cations. The same effect is produced by crushed carbon fiber having sharp ends. The mechanism of selectively capturing cations has not yet been elucidated. A probable reason is that the capturing agent (carbon fiber) projecting 0.1-50 µm from the surface of the negative electrode produces a gradient of electric field on the surface of the negative electrode, thereby reducing and fixing cations more readily than lithium ions.

Such capturing agents as silica gel, active alumina, porous alumina (prepared from aluminum by electrolytic oxidation), titania, zeolite, and other metal oxides are insulating materials. Therefore, they may be added not only to the positive and negative electrodes and separator but also to the electrolyte solution. The thus added metal oxides capture cations and fluoride ions. By contrast, carbonaceous capturing agents such as activated carbon, porous carbon, and acicular and fibrous carbon are conducting materials. Therefore, if they are suspended in the electrolyte solution, there is the possibility of internal short taking place across the positive electrode and the negative electrode. Consequently, such capturing agents as activated carbon, porous carbon, and fibrous carbon should be present on the negative electrode or on the separator or the battery can which is opposite to the negative electrode. In the case where any of these capturing agents is added to the negative electrode, it does not hamper the charging and discharging action of the negative electrode even though it is amorphous carbon or graphite (which electrochemically occludes and releases lithium ions) or carbon black or activated carbon (which hardly occludes lithium ions). Further, the capturing agent does not hamper the charging and discharging action of the negative electrode to the cathode active materials of lithium-metal complex oxides such as LiCoO₂, LiNiO₂, LiMn₂O₄, LiMnO₂, Fe₂(SO₄)₃, LiFeO₂ etc. and materials substituted part of these metallic ions by a different kind of element.

Other compounds that can be used as the capturing agent in the present invention include acetylacetone, ethylenediaminetetraacetic acid, 1,10-phenathroline, 1,2-bis-(diphenylsulfine)ethane, 2,2'-bipyridine, and phthalocyanine, all of which have oxygen or nitrogen for coordination. They capture heavy metal ions which have leached out of the positive electrode or the battery can. The above-mentioned complexing substances may be used in the form of their derivatives which have functional groups (such as halogen, -NH₃, -NR₃, -NHNH₃, and -NRNR₃, with R representing a hydrocarbon group such as alkyl group and phenyl group), hydroxyl groups, carbonyl groups, carboxyl groups, aromatic substituents having one or more benzene rings, hydrocarbon groups (such as alkyl group, alkenyl group, alkynyl group), and functional groups in which hydrogen atoms in the aromatic substituent or hydrocarbon group are partly replaced by hydroxyl groups, carbonyl groups, or carboxyl groups. The scope of the present invention is not restricted to the substances enumerated above; it embraces any substance that forms a complex with cations. The complexing substance may be dissolved in the electrolyte solution if it is soluble in the electrolyte solution; however, it should preferably be stuck or fixed to the positive electrode, negative electrode, separator, or battery can wall. This object will be accomplished if hydroxyl groups, carbonyl groups, or carboxyl groups are formed on the surface of the positive electrode, negative electrode, or separator, and hydroxyl groups, carbonyl groups, or carboxyl groups are introduced into the capturing agent, so that the capturing agent is fixed to the surface of the positive electrode, negative electrode, or separator by condensation reaction. In a preferred embodiment, the capturing agent is held on or in the separator of olefin polymer (such as polyethylene and polypropylene), so that it captures metal ions (other than lithium ions) which have dissolved in the electrolyte solution before they reach the negative electrode or before protons corrode the positive electrode. In another preferred embodiment, the capturing agent is fixed to the surface of carbon particles and the resulting carbon particles are mixed with the anode or cath ode active material. Fixing is accomplished by condensation reaction between functional groups (such as hydroxyl groups, carbonyl groups, and carboxyl groups) formed on the surface of carbon particles (such as graphite and carbon black) and functional groups (such as hydroxyl groups, carbonyl groups, and carboxyl groups) introduced into the capturing agent. It is desirable that the carbon particles carrying the capturing agent should be mixed with the cathode active material, because the capturing agent is easily protected from oxidation by oxygen on the surface of the cathode active material and the effect of the capturing agent persists longer. The capturing agent used in the above-mentioned way combines with cations to form a complex which does not dissolve in the electrolyte solution. Consequently, there is no possibility of the complex decomposing at the negative electrode, thereby permitting the reduction and precipitation of cations and hampering the charging and discharging reaction at the negative electrode. This contributes to improvement in the cycle characteristics of the lithium secondary battery at high temperatures.

The electrolyte solution contains hydrogen fluoride, which ionizes to evolve protons. These protons can be captured with the aid of any of silica, silica gel, porous alumina, active alumina, porous alumina obtained by electrolytic oxidation of aluminum surface, titania, compound oxides of SiO₂-Al₂O₃ and SiO₂-TiO₂, and other amphoteric oxides; MgO, CaO, BaO, Sr₂O₃, and other basic metal oxides containing alkaline earth metal; and zeolite having a porous structure. The basic oxide obtained from any of hydroxides such as Mg(OH)₂, Ca(OH)₂, Sr(OH)₂, and Ba(OH)₂ by thermal decomposition has as many base points as 0.1-1 mmol per gram on its surface. If a hydroxide (such as Mg(OH)₂, Ca(OH)₂, Sr(OH)₂, and Ba(OH)₂) is held on the surface of an oxide (such as silica gel, SiO₂-Al₂O₃ and SiO₂-TiO₂ compound oxides, zeolite, active alumina, titania, and porous alumina) and then undergoes thermal decomposition, the resulting product is able to capture protons and remove impurity ions simultaneously. This contributes to the removal of impurities. Hydroxyl groups present on the surface of silica, porous alumina, active alumina, titania, SiO₂-Al₂O₃ and SiO₂-TiO₂ compound oxides, and zeolite may have its protons replaced by lithium ions. The resulting product absorbs impurity ions in the electrolyte solution and releases lithium ions into the electrolyte solution without releasing protons into the electrolyte solution. This is desirable for the removal of impurities. The step of replacing the protons of hydroxyl groups by lithium ions may be omitted if a basic oxide is held on the surface of silica, porous alumina, active alumina, titania, SiO₂-Al₂O₃ and SiO₂-TiO₂ compound oxides, and zeolite, and this is more desirable. Selection of a zeolite to be used as the capturing agent should be made from the view point of optimum pore diameter rather than particle diameter and chemical composition. According to the present invention, the capturing agent is a zeolite having a pore diameter no larger than 0.5 nm. Such a zeolite does not adsorb the solvent of electrolyte solution which has a large molecular size but effectively captures impurity ions. This contributes to improvement in the cycle characteristics of the lithium secondary battery at high temperatures. The capturing agent in the cathode active material and the capturing agent in the anode active material should be selected separately such that the potential necessary for the captured impurities (such as metal, hydrogen, and fluorine) to oxidize and leave is higher than the working potential of the positive electrode or negative electrode. This contributes to improvement in the cycle characteristics of the lithium secondary battery at high temperatures. Because these inorganic capturing agents are of an insulating nature, they should be added to the cathode active material or anode active material in an amount less than 10% (preferably less than 5%) of the weight of the active material, so that the discharge capacity per unit weight of the active material (with the capturing agent) does not differ from that of the active material (without the capturing agent) by more than 5%. Therefore, this is desirable in the present invention.

The same capturing agent as used to capture cations can be used to capture fluoride ions. It includes, for example, silica gel, porous alumina, active alumina, porous alumina obtained by electrolytic oxidation of aluminum surface, titania, and zeolite. These substances have a large specific surface area and hence are capable of removing fluoride ions from the electrolyte solution by adsorption or ion exchange. Zeolite having a pore diameter of 0.3-0.5 nm is particularly effective; it does not adsorb the solvent of electrolyte solution which has a large molecular size but efficiently captures fluoride ions. Thus it effectively improves the cycle characteristics of the lithium secondary battery at high temperatures.

Since the inorganic capturing agents listed above are of an insulating nature, they should be added to the cathode or anode active material in as small an amount as possible for the total weight of the active material. The amount of the capturing agent that produces the effect of removing impurities in the present invention is 0.1-10% of the total weight of the active material. If the amount of the capturing agent is less than 5%, the discharge capacity per unit weight of the active material (with the capturing agent) does not differ from that of the active material (without the capturing agent) by more than 5%. Therefore, this is desirable in the present invention.

The present inventors paid their attention to another substance to capture fluoride ions which reacts with fluoride ions to give a fluoride salt having a low solubility. As the result, the present inventors found that an alkaline earth metal (such as Ca and Ba) or an oxide thereof, which is held on the surface of the anode active material or the separator captures fluoride ions and then converts them into fluoride salts such as MgF₂, CaF₂, and BaF₂. The mechanism of capture by an oxide of alkaline earth metal has not yet been elucidated. It is assumed that capture results from cleavage of linkage between alkaline earth metal and oxygen and formation of a new linkage between alkaline earth metal and fluorine. An alkaline earth metal can be held on the anode active material by an electrochemical process which consists of dissolving a salt (such as chloride, nitrate, sulfate, and carbonate) of alkaline earth metal (such as magnesium, barium, and calcium) in the electrolyte solution and charging the negative electrode. This process causes the alkaline earth metal to separate out only on the outermost surface of the anode active material. The resulting negative electrode captures fluoride ions on its outermost surface in contact with the electrolyte solution. In this way a smaller amount of capturing agent produces the same effect as a capturing agent uniformly dispersed in the anode active material. It is possible to fix the oxide of alkaline earth metal to the anode active material, the separator, or the inner wall of the battery can by treatment of the anode active material, separator, or battery can with a solution of a chloride, nitrate, sulfate, carbonate, or oxide of alkaline earth metal in water or alcohol, followed by heating and drying in the air. The same effect of the present invention as mentioned above is also obtained if the anode active material is incorporated with carbon black (such as acetylene black and Ketjen black, which do not practically occlude lithium ions) which has been dipped in a solution of alkaline earth metal and then heated in the air or an oxidizing atmosphere.

As mentioned above, the present invention is characterized by a capturing agent which is added to any of the cathode active material, anode active material, electrolyte solution, and separator. This capturing agent removes impurities (such as cations and fluoride ions) and by-products present in the lithium secondary battery, thereby improving the cycle characteristics of the lithium secondary battery at high temperatures. The present invention does not restrict the place where the capturing agent exists. The present invention can also be applied to the solid electrolyte or gel electrolyte which conducts lithium ions. The capturing agent held in the solid electrolyte or gel electrolyte improves the cycle characteristics of the lithium secondary battery at high temperatures.

### BRIEF DESCRIPTION OF THE DRAWINGS

Fig. 1 is a diagram showing the construction of the cylindrical lithium secondary battery in one example of the present invention.

Fig. 2 is a graph showing how the lithium secondary batteries in Example 1 and Comparative Example 1 change in the retention of capacity depending on the number of cycles.

Fig. 3 is a graph showing the relation between the specific surface area of the activated carbon added to the negative electrode and the retention of capacity, in the lithium secondary batteries in Example 1 and Comparative Example 1.

Fig. 4 is a diagram showing the construction of the cylindrical lithium secondary battery in one example of the present invention.

### DERAILED DESCRIPTION OF THE PREFERRED EMBODIMENTS

The invention will be more clearly understood with reference to the following examples. These examples are intended to illustrate the invention and are not to be construed to limit the scope thereof. They can be changed or modified without departing from the spirit and scope of the invention.

### Example 1

A slurry for the positive electrode was prepared by mixing from a cathode active material, natural graphite, and polyvinylidene fluoride dissolved in 1-methyl-2-pyrrolidone in a ratio of 90:6:4 by weight. The cathode active material is LiMn₂O₄ powder having an average particle diameter of 20 µm and a maximum particle diameter of 80 µm. This slurry was applied by doctor coating to the surface of aluminum foil (20 µm thick) as the current collector of the positive electrode. The positive electrode measures 54 mm wide and 500 mm long. The coated positive electrode was dried at 100°C for 2 hours.

Five kinds of slurry for the negative electrode were prepared by mixing from amorphous carbon, activated carbon, and polyvinylidene fluoride dissolved in 1-methyl-2-pyrrolidone in a ratio of 87:3:10 by weight. The amorphous carbon is the anode active material, which has an average particle diameter of 5 µm and a specific surface area of 5 m²/g. It electrochemically occludes and releases lithium ions. The activated carbon is the capturing agent, which varies in specific surface area in the range of 1000 to 3000 m²/g depending on grades. (Five grades were used in this example.) This activated carbon hardly occludes and releases lithium ions. The five grades of activated carbon as the capturing agent (which are designated as C2, C3, C4, C5, and C6) have respectively the specific surface area and pore volume as follows.
C2 : 1000-1100 m²/g and 0.10-0.30 cc/g
C3 : 1450-1700 m²/g and 0.45-0.65 cc/g
C4 : 1600-1800 m²/g and 0.60-0.80 cc/g
C5 : 1800-2200 m²/g and 0.70-1.00 cc/g
C6 : 2800-3000 m²/g and 1.50-1.80 cc/g
All of the five grades of activated carbon have an average particle diameter smaller than 20 µm. Each slurry was applied by doctor coating to the surface of copper foil (10 µm thick) as the current collector of the negative electrode. The negative electrode measures 56 mm wide and 560 mm long. The coated negative electrode was dried at 100°C for 2 hours. Thus there were obtained five kinds of negative electrodes.

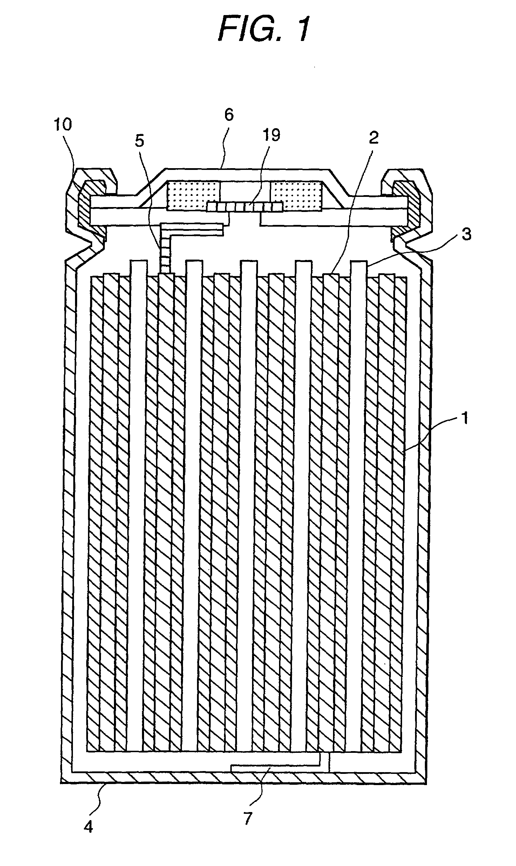

Fig. 1 shows the sectional structure of the cylindrical lithium secondary battery of the present invention. The battery measures 65 mm high and 18 mm in diameter. The electrodes are of spiral type, with the positive electrode 1 and the negative electrode 2 separated by the separator 3. The separator used in this example is a porous polyethylene sheet, 25 µm thick, which has a pore diameter of 0.1-1 µm and a porosity of 40-50%. To the positive electrode 1 was welded a positive electrode lead 5, which was welded to the bottom of the battery lead. To the negative electrode 2 was welded a negative electrode lead 7, which was welded to the bottom of the battery can. An electrolyte solution was admitted into the battery can through the can opening. The battery can 4 was hermetically closed by crimping the battery lid 6 (having a safety valve 19), with a packing 10 interposed between them. The electrolyte solution was prepared by dissolving 1 mol of lithium hexafluorophosphate (LiPF₆) in one liter of ethylene carbonate and dimethyl carbonate mixed in equal volumes.

The battery delivers electrochemical energy through the battery can 6 and the battery lid 4, and it stores electrochemical energy by charging. This battery has an average discharging voltage of 3.7 V and a rated capacity of 0.9 Ah and 3.3 Wh. The lithium batteries in this example are designated as A11, A12, A13, A14, and A15 corresponding to the five grades of activated carbon used, C2, C3, C4, C5 and C5.

Table 1 shows the battery number, cathode active material, anode active material, and capturing agent, and the result of cycle test at 60°C in each example. The result of cycle test is expressed in terms of the retention of capacity which is the ratio of the discharging capacity to the initial discharging capacity. Measurements were carried out after 50, 300, and 500 cycles. The discharging current was set up such that the rated capacity becomes empty within one hour.

**Table 1**

| Example | Battery No. | Cathode active material | Anode active material | Capturing agent | Retention of capacity (%) | | |
|---|---|---|---|---|---|---|---|
| | | | | | 50 cycles | 300 cycles | 500 cycles |
| Example 1 | A11 | LiMn₂O₄ | Amorphous carbon | Activated carbon C2 | 93 | 77 | 70 |
| | A12 | LiMn₂O₄ | Amorphous carbon | Activated carbon C3 | 94 | 79 | 75 |
| | A13 | LiMn₂O₄ | Amorphous carbon | Activated carbon C4 | 94 | 82 | 78 |
| | A14 | LiMn₂O₄ | Amorphous carbon | Activated carbon C5 | 94 | 83 | 78 |
| | A15 | LiMn₂O₄ | Amorphous carbon | Activated carbon C6 | 95 | 84 | 79 |
| Example 2 | A2 | LiMn₂O₄ | Amorphous carbon | Ketjen black | 92 | 83 | 78 |
| Example 3 | A301 | LiMn₂O₄ | Amorphous carbon | Silica gel | 92 | 82 | 77 |
| | A302 | LiMn₂O₄ | Amorphous carbon | Zeolite | 95 | 85 | 80 |
| | A303 | LiMn₂O₄ | Amorphous carbon | Active alumina | 98 | 88 | 79 |
| | A304 | LiMn₂O₄ | Amorphous carbon | Silica gel | 91 | 82 | 78 |
| | A305 | LiMn₂O₄ | Amorphous carbon | Zeolite | 92 | 84 | 81 |
| | A306 | LiMn₂O₄ | Amorphous carbon | Active alumina | 95 | 88 | 79 |
| | A307 | LiMn₂O₄ | Amorphous carbon | MgO | 95 | 85 | 80 |
| | A308 | LiMn₂O₄ | Amorphous carbon | CaO | 94 | 85 | 80 |
| | A309 | LiMn₂O₄ | Amorphous carbon | Bao | 94 | 82 | 79 |
| | A310 | LiMn₂O₄ | Amorphous carbon | SrO | 93 | 80 | 75 |
| | A311 | LiMn₂O₄ | Amorphous carbon | MgO-carrying silica gel | 97 | 87 | 84 |
| Example 4 | A41 | LiMn₂O₄ | Amorphous carbon | Complexing agent 1 | 90 | 82 | 79 |
| | A42 | LiMn₂O₄ | Amorphous carbon | Complexing agent 2 | 94 | 85 | 80 |
| | A43 | LiMn₂O₄ | Amorphous carbon | Complexing agent 3 | 91 | 85 | 80 |
| | A44 | LiMn₂O₄ | Amorphous carbon | Complexing agent 4 | 92 | 85 | 79 |
| | A45 | LiMn₂O₄ | Amorphous carbon | Complexing agent 5 | 91 | 85 | 78 |
| | A46 | LiMn₂O₄ | Amorphous carbon | Complexing agent 6 | 95 | 85 | 77 |
| Example 5 | A5 | LiMn₂O₄ | Amorphous carbon | Complexing agent 3 | 92 | 87 | 79 |
| Example 6 | A6 | LiMn₂O₄ | Amorphous carbon | Complexing agent 3 | 93 | 85 | 78 |
| Example 7 | A7 | LiMn₂O₄ | Amorphous carbon | Complexing agent 3 | 93 | 86 | 78 |
| Example 8 | A81 | LiMn₂O₄ | Amorphous carbon | Carbon fiber (2 µm long) | 91 | 84 | 79 |
| | A82 | LiMn₂O₄ | Amorphous carbon | Carbon fiber (5 µm long) | 92 | 82 | 80 |
| | A83 | LiMn₂O₄ | Amorphous carbon | Carbon fiber (10 µm long) | 93 | 83 | 80 |
| Example 9 | A91 | LiMn₂O₄ | Amorphous carbon | Complexing agent 8 | 95 | 88 | 81 |
| | A92 | LiMn₂O₄ | Amorphous carbon | Li ion exchange zeolite | 97 | 91 | 84 |
| Example 10 | A101 | LiMn₂O₄ | Amorphous carbon | Calcium chloride | 91 | 88 | 79 |
| | A102 | LiMn₂O₄ | Amorphous carbon | Barium chloride | 88 | 86 | 80 |
| | A103 | LiM₂O₄ | Amorphous carbon | Calcium chloride + acetylene black | 90 | 87 | 81 |
| Example 11 | A111 | LiMn₂O₄ | Amorphous carbon | Zeolite (pore dia. 0.3 nm) | 90 | 85 | 79 |
| | A112 | LiMn₂O₄ | Amorphous carbon | Zeolite (pore dia. 0.5 nm) | 91 | 88 | 79 |
| | A113 | LiMn₂O₄ | Amorphous carbon | CaO-coated zeolite (pore dia. 0.5 nm) | 95 | 91 | 87 |
| Example 12 | A12 | LiCoO₂ | Natural graphite | Activated carbon C4 | 96 | 92 | 90 |
| Example 13 | A13 | LiNi_{0.8}Co_{0.2}O₂ | Natural graphite | Activated carbon C4 | 96 | 89 | 85 |
| Cam. Ex. 1 | B11 | LiMn₂O₄ | Amorphous carbon | None | 68 | 15 | -- |
| | B12 | LiMn₂O₄ | Amorphous carbon | Activated carbon C1 | 85 | 55 | -- |
| Com. Ex. 2 | B2 | LiMn₂O₄ | Amorphous carbon | Zeolite (pore dia. 0.7 nm) | 85 | 72 | 60 |
| Com. Ex. 3 | B3 | LiCoO₂ | Natural graphite | None | 86 | 70 | 62 |
| Com. Ex. 4 | B4 | LiNi_{0.8}Co_{0.2}O₂ | Natural graphite | None | 84 | 69 | 58 |

Therein, Table 1 shows the retention ratios of capacity measured after cycle tests at 60 °C for the lithium secondary batteries described in Examples 1, 2, 3, 4, 5, 6, 7, 8, 9, 10, 11, 12, 13 and Comparative Examples 1, 2, 3. Therefore, the cases other than Example 1 are to be described later.

### Example 2

The same procedure as in Example 1 was repeated except that the activated carbon for the negative electrode was replaced by Ketjen black having a specific surface area of 1000 m²/g. The negative electrode measures 56 mm wide and 560 mm long. The negative electrode was dried at 100°C for 2 hours. The cylindrical lithium secondary battery as shown in Fig. 1 was made in the same way as in Example 1 except that the negative electrode was replaced by the one mentioned above. The resulting battery had an average discharge voltage of 3.7 V and a rated capacity of 0.9 Ah and 3.3 Wh. This battery is designated as A2. This battery gave the result of cycle test at 60°C as shown in Table 1.

### Comparative Example 1

The same procedure as in Example 1 was repeated to prepare a cylindrical lithium secondary battery except that the capturing agent was not used and the negative electrode was replaced by the one explained below. A slurry for the negative electrode was prepared by mixing from amorphous carbon powder (having an average particle diameter of 5 µm and a specific surface area of 5 m²/g) and polyvinylidene fluoride (dissolved in 1-methyl-2-pyrrolidone) in a ratio of 90:10 by weight. This slurry was applied by doctor coating to the surface of copper foil (10 µm thick) as the current collector of the negative electrode. The negative electrode measures 56 mm wide and 560 mm long. The coated negative electrode was dried at 100°C for 2 hours. The resulting battery is designated as B11.

The same procedure as in Example 1 was also repeated to prepare another cylindrical lithium secondary battery except that the negative electrode was replaced by the one explained below. A slurry for the negative electrode was prepared by mixing from amorphous carbon powder, activated carbon C1 (having an average particle diameter of 20 µm, a specific surface area of 600-800 m²/g, and a pore volume of 0.05-0.10 cc/g), and polyvinylidene fluoride (dissolved in 1-methyl-2-pyrrolidone) in a ratio of 87:3:10 by weight. This slurry was applied by doctor coating to the surface of copper foil (10 µm thick) as the current collector of the negative electrode. The negative electrode measures 56 mm wide and 560 mm long. The coated negative electrode was dried at 100°C for 2 hours. The resulting battery is designated as B12. The batteries in this Comparative Example gave the result of cycle test at 60°C as shown in Table 1.

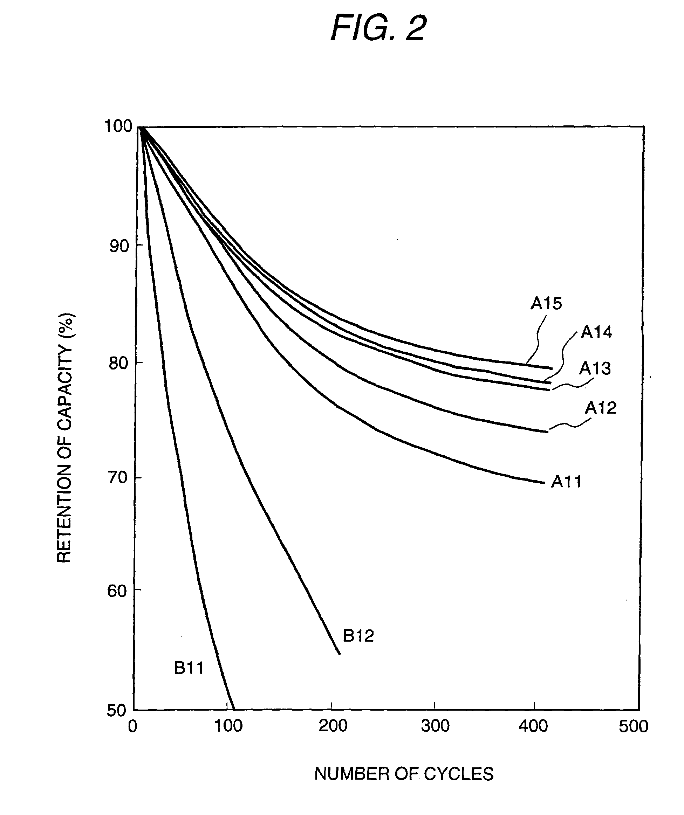

The batteries A11, A12, A13, A14, A15, and A2 in Examples 1 and 2 and the batteries B11 and B12 in Comparative Example 1 underwent charging and discharging cycle test. Fig. 2 shows the retention of capacity versus the number of cycles. The battery was charged with a current of 0.3 A at a constant voltage for 5 hours, with the end voltage being 4.2 V. The battery was discharged with a current of 0.3 A until the battery voltage reached 3.0 V. The cycle test was carried out at 60°C. It was found that the battery B11 in Comparative Example 1 decreased in the retention of capacity according as the number of cycles increased. The capacity after 50 cycles of charging and discharging decreased to 70% of the initial capacity. In the case of the battery B12 in which the negative electrode was incorporated with activated carbon C1, the capacity after 300 cycles of charging and discharging decreased to 55% of the initial capacity. The batteries A11, A12, A13, A14, A15, and A2 pertaining to the present invention decreased only slightly in the retention of capacity. They maintained 70-79% of the initial discharging capacity even after 500 cycles of charging and discharging test.

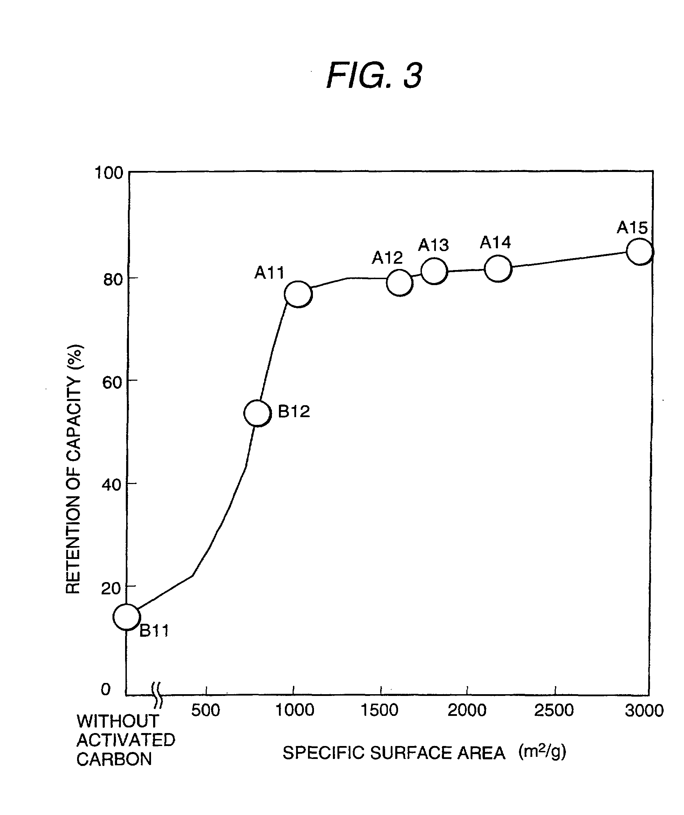

Fig. 3 shows the retention of capacity after 300 cycles which is plotted against the specific surface area of activated carbon. In the case of battery B11 in which the negative electrode is not incorporated with activated carbon, the retention of capacity decreased to 15 after 300 cycles. In the case of battery B12 in which the negative electrode is incorporated with activated carbon C1 having a small specific surface area of 600-800 m²/g, the retention of capacity decreased to 55% after 300 cycles. In the case of batteries A11, A12, A13, A14, and A15 which employ activated carbon C2, C3, C4, C5, and C6 having a specific surface area larger than 1000 m²/g, the retention of capacity was 77-84% of the initial capacity even after 300 cycles.

### Example 3

Three kinds of separators were prepared as follows, each consisting of a polypropylene non-woven fabric (30 µm thick) and any of the following three capturing agents carried thereon.

Silica gel having an average particle diameter of 2 µm. Silica-alumina zeolite having an average particle diameter of 2 µm and a pore diameter of 0.5 nm.

Active alumina having an average particle diameter of 2 µm.

Each capturing agent was dispersed in dimethoxyethane, and the non-woven fabric was dipped in the dispersion. Dipping was followed by vacuum-drying at room temperature.

Three kinds of cylindrical lithium secondary batteries as shown in Fig. 1 were prepared in which the positive and negative electrodes and electrolyte solution are identical with those used in battery B11 in Comparative Example 1 and the separator is any of the above-mentioned ones. The batteries with silica gel, zeolite, and active alumina are designated as A301, A302, and A303, respectively.

Three kinds of negative electrodes were prepared as follows, each consisting of the same negative electrodes as prepared in Comparative Example 1 and any of the above-mentioned three capturing agents. Each capturing agent (silica gel, zeolite, or active alumina) was dispersed in dimethoxyethane, and the negative electrode was dipped in the dispersion. Dipping was followed by drying for solvent removal. The amount of the capturing agent is 3% of the weight of the amorphous carbon. Three kinds of cylindrical lithium secondary batteries as shown in Fig. 1 were prepared in which the positive electrode, separator, and electrolyte solution are identical with those used Comparative Example 1 and the negative electrode is any of the above-mentioned ones. The batteries with silica gel, zeolite, and active alumina are designated as A304, A305, and A306, respectively.

Four kinds of negative electrodes were prepared as follows, each consisting of the same negative electrodes as prepared in Comparative Example 1 and any of the following four capturing agents.

MgO, CaO, BaO, and SrO which were obtained from Mg(OH)₂, Ca(OH)₂, Ba(OH)₂, and Sr(OH)₂ by heating at 500°C. Each of these four oxides was pulverized by ball-milling and the resulting powder was classified to give a powder having an average particle diameter of 10 µm. The oxide powder was dispersed in dimethoxyethane, and the resulting dispersion was applied to the surface of the negative electrode prepared in Comparative Example 1. Coating was followed by drying. Four kinds of cylindrical lithium secondary batteries as shown in Fig. 1 were prepared in which the positive electrode, separator, and electrolyte solution are identical with those used Comparative Example 1 and the negative electrode is any of the above-mentioned ones. The amount of the capturing agent is 3% of the weight of the amorphous carbon. The batteries with MgO, CaO, BaO, and SrO are designated as A307, A308, A309, and A310, respectively.

One kind of negative electrode was prepared as follows which consists of the same negative electrode as prepared in Comparative Example 1 and MgO-carrying silica gel as the capturing agent. This capturing agent was prepared by impregnation of silica gel with an aqueous solution of Mg(OH)₂ and ensuing heating at 500°C. The coated silica gel was pulverized by ball-milling and the resulting powder was classified to give an MgO-carrying silica gel powder having an average particle diameter of 10 µm. The silica gel powder was dispersed in dimethoxyethane, and the resulting dispersion was applied to the surface of the negative electrode prepared in Comparative Example 1. Coating was followed by drying. The amount of the capturing agent is 3% of the weight of the amorphous carbon. One kind of cylindrical lithium secondary battery as shown in Fig. 1 was prepared in which the positive electrode, separator, and electrolyte solution are identical with those used in Comparative Example 1 and the negative electrode is the above-mentioned one. This battery is designated as A311.

The eleven kinds of batteries prepared in this example had an average discharge voltage of 3.7 V and a rated capacity of 0.9 Ah and 3.3 Wh. These batteries gave the result of cycle test at 60°C as shown in Table 1.

### Example 4

This example demonstrates the effect of six kinds of capturing agents, which are acetylacetone, ethylenediaminetetraacetic acid, 1,10-phenathroline, 1,2-bis-(diphenyl-sulfine)ethane, 2,2'-bipyridine, and phthalocyanine. They are sequentially designated as complexing agents 1, 2, 3, 4, 5, and 6. Each of the complexing agents was dissolved in water, ethanol, butanol, or hexane. Each solution of the complexing agent was applied to a polyethylene separator (25 µm thick). Coating was followed by vacuum-drying at room temperature. In this way there were obtained 16 kinds of separators. Sixteen kinds of cylindrical lithium secondary batteries as shown in Fig. 1 were prepared in which the positive electrode, negative electrode, and electrolyte solution are identical with those used in Comparative Example 1 and the separator is any of the above-mentioned ones. The batteries with complexing agents 1, 2, 3, 4, 5, and 6 are designated respectively as A41, A42, A43, A44, A45, and A46. The sixteen kinds of batteries prepared in this example had an average discharge voltage of 3.7 V and a rated capacity of 0.9 Ah and 3.3 Wh. These batteries gave the result of cycle test at 60°C as shown in Table 1.

### Example 5

A polyethylene separator (25 µm thick) was treated with plasma so that hydroxyl groups were formed on the surface thereof. This plasma-treated separator was brought into contact with 1,10-phenathroline (complexing agent 3) which had been modified by introduction of a carboxyl group into the phenyl group and treatment of the carboxyl group with thionyl chloride for conversion of -COOH into -COCl. The coated separator was heated for condensation reaction so that 1,10-phenathroline (complexing agent 3) was fixed to the surface of the separator. One kind of cylindrical lithium secondary battery as shown in Fig. 1 was prepared in which the positive electrode, negative electrode, and electrolyte solution are identical with those used in battery B11 in Comparative Example 1 and the separator is the above-mentioned one. This battery is designated as A5. This battery gave the result of cycle test at 60°C as shown in Table 1.

### Example 6

Graphite powder having an average particle diameter of 2 µm was oxidized by heating or treated with plasma so that hydroxyl groups were formed on the surface thereof. This plasma-treated graphite was brought into contact with 1,10-phenathroline (complexing agent 3) which had been modified by substitution of hydrogen at position 4 or 5 with a carboxyl group and subsequent treatment of the carboxyl group with thionyl chloride for conversion of -COOH into -COCl. The coated separator was heated for condensation reaction so that 1,10-phenathroline (complexing agent 3) was fixed to the surface of the graphite. A slurry for the cathode active material was prepared by mixing from LiMn₂O₄ powder (used in Example 1), graphite powder containing a capturing agent (prepared as mentioned above), and polyvinylidene fluoride dissolved in 1-methyl-2-pyrrolidone in a ratio of 90:6:4 by weight. This slurry was applied by doctor coating to the surface of aluminum foil (20 µm thick) as the current collector of the positive electrode. The positive electrode has the same dimensions as that in Example 1. A lithium secondary battery of the same structure as shown in Fig. 1 was prepared in which the negative electrode, separator, and electrolyte solution are identical with those used in battery B11 in Comparative Example 1 and the positive electrode is the above-mentioned one. This battery is designated as A6. This battery gave the result of cycle test at 60°C as shown in Table 1.

### Example 7

Graphite powder having an average particle diameter of 2 µm was oxidized by heating or treated with plasma so that hydroxyl groups were formed on the surface thereof. This plasma-treated graphite was brought into contact with 1,10-phenathroline (complexing agent 3) which had been modified by substitution of hydrogen at position 4 or 5 with a carboxyl group and subsequent treatment of the carboxyl group with thionyl chloride for conversion of -COOH into -COCl. The coated separator was heated for condensation reaction so that 1,10-phenathroline (complexing agent 3) was fixed to the surface of the graphite. A slurry for the anode active material was prepared by mixing from amorphous carbon (used in Example 1), graphite powder containing a capturing agent (prepared as mentioned above), and polyvinylidene fluoride dissolved in 1-methyl-2-pyrrolidone in a ratio of 87:3:10 by weight. This slurry was applied by doctor coating to the surface of copper foil (10 µm thick) as the current collector of the negative electrode. The negative electrode has the same dimensions as that in Example 1. A lithium secondary battery of the same structure as shown in Fig. 1 was prepared in which the posi tive electrode, separator, and electrolyte solution are identical with those used in battery B11 in Comparative Example 1 and the negative electrode is the above-mentioned one. This battery is designated as A7. This battery gave the result of cycle test at 60°C as shown in Table 1.

### Example 8

This example demonstrates the effect of carbon fiber having a high aspect ratio as the capturing agent. Three kinds of slurries for the negative electrode were prepared by mixing from amorphous carbon powder having an average particle diameter of 5 µm, any of three kinds of petroleum pitch-based carbon fiber (1 µm in diameter and 2, 5, or 10 µm long) varying in aspect ratio, and polyvinylidene fluoride dissolved in 1-methyl-2-pyrrolidone in a ratio of 85:5:10 by weight. This slurry was applied by doctor coating to the surface of copper foil (10 µm thick) as the current collector of the negative electrode. Coating was followed by drying at 100°C for 2 hours. The negative electrode measures 56 mm wide and 560 mm long. Three kinds of cylindrical lithium secondary batteries of the same specification as in Example 1 were prepared in which the positive electrode, separator, and electrolyte solution are identical with those used in Example 1 and the negative electrode is the above-mentioned one. These batteries with carbon fibers 2, 5, and 10 µm long were designated as A81, A82, and A83, respectively. These batteries gave the result of cycle test at 60°C as shown in Table 1.

The same procedure as mentioned above was repeated to prepare a lithium secondary battery except that the petroleum pitch-based carbon fiber (1 µm in diameter and 10 µm long) was crushed so that fiber ends were sharpened. The battery gave the same result of cycle test as battery A83.

### Example 9

This example demonstrates the effect of solid electrolyte used in place of the separator. Ethylene oxide was mixed with 5 wt% of 1,10-phenathroline (complexing agent 3), and the resulting mixture was irradiated with ultraviolet rays so that ethylene oxide was polymerized and crosslinked. Thus there was obtained a solid electrolyte sheet. The resulting ethylene oxide polymer had a molecular weight of 200,000-300,000. This solid electrolyte sheet was incorporated with the electrolyte solution in Example 1 to give a gel-like electrolyte sheet. A cylindrical lithium secondary battery as shown in Fig. 1 was prepared from this gel-like electrolyte sheet and the positive electrode and negative electrode. This battery is designated as battery A91. This battery gave the result of cycle test at 60°C as shown in Table 1.

This example also demonstrates the effect of solid electrolyte of another type. Zeolite of the same kind as used in Example 3 was immersed for one week in an electrolyte solution of propylene carbonate and dimethyl carbonate which contains 1 mol/dm³ of LiBF₄ so that protons in the zeolite were replaced by lithium ions. The zeolite was filtered and recovered and the recovered zeolite was immersed again in a mixed solvent of propylene carbonate and dimethyl carbonate for the removal of residual LiBF₄. The zeolite was filtered again and dried in a vacuum. Thus there was obtained a lithium ion-substituted zeolite. This zeolite was mixed with ethylene oxide, and the mixture was irradiated with ultraviolet rays for the polymerization and crosslinking of ethylene oxide. Thus there was obtained a solid electrolyte sheet. The resulting ethylene oxide polymer had a molecular weight of 200,000-300,000. The amount of zeolite was 2% of polyethylene oxide. This solid electrolyte sheet was incorporated with the electrolyte solution in Example 1 to give a gel-like electrolyte sheet. A cylindrical lithium secondary battery as shown in Fig. 1 was prepared from this gel-like electrolyte sheet and the positive electrode and negative electrode of the same specification as in Example 1. This battery is designated as battery A92. This battery gave the result of cycle test at 60°C as shown in Table 1.

### Example 10

A cylindrical lithium secondary battery as shown in Fig. 1 was prepared in which the positive electrode, negative electrode, and separator are identical with those in battery B11 in Comparative Example 1 but the electrolyte solution is different in that it contains 1000 ppm of calcium chloride or barium chloride dissolved therein. The battery was charged at room temperature so that calcium or barium precipitated on the surface of the negative electrode. The battery with the electrolyte containing calcium chloride is designated as battery A101, and the battery with the electrolyte containing barium chloride is designated as battery A102. Acetylene black was mixed with an ethanol solution of calcium carbonate. The mixture was filtered and then dried in the air at 200-400°C. Thus there was obtained acetylene black powder supporting calcium oxide. A negative electrode was prepared by mixing from amorphous carbon powder (having an average particle diameter of 5 µm and a specific surface area of 5 m²/g), acetylene black supporting calcium oxide, and polyvinylidene fluoride in a ratio of 88:2:10 by weight. This negative electrode was used to form a cylindrical lithium secondary battery as shown in Fig. 1 in which the positive electrode, separator, and electrolyte solution are identical with those mentioned above. This battery is designated as battery A103. This battery gave the result of cycle test at 60°C as shown in Table 1.

### Example 11

A cylindrical lithium secondary battery was prepared in which the positive electrode, separator, and electrolyte solution are identical with those in Example 1 but the negative electrode is the one prepared as follows. Silica-alumina zeolite (having a pore diameter of 0.3 nm or 0.5 nm and an average particle diameter of 5 µm) was dispersed in water or a non-aqueous solvent such as alcohol, 1-methyl-2-pyrrolidone, propylene carbonate, dimethyl carbonate, and γ-butyrolactone. In this dispersion was dissolved a lithium salt such as lithium carbonate and lithium chloride so that protons were replaced by lithium ions. The thus treated zeolite was mixed with the anode active material. The resulting anode active material is composed of amorphous carbon, zeolite, and binder in a ratio of 87:3:10 by weight. The thus obtained anode active material was applied to copper foil (10 µm thick) and the coated copper foil was pressed to give the negative electrode. The batteries are designated respectively as A111 and A112 corresponding to the zeolite's pore diameter of 0.3 nm and 0.5 nm. These batteries gave the result of cycle test at 60°C as shown in Table 1.

The above-mentioned zeolite was impregnated with an aqueous solution of Ca(OH)₂. The impregnated zeolite was heated at 500°C so that Ca(OH)₂ on the zeolite surface changed into CaO. The heated zeolite was pulverized by ball-milling, and the resulting powder was classified to give a CaO-coated zeolite powder having an average particle diameter of 10 µm. This zeolite powder was dispersed in dimethoxyethane, and the resulting dispersion was applied to the negative electrode mentioned in Comparative Example 1. Coating was followed by drying. The amount of the capturing agent used in this example is 3% of the weight of the amorphous carbon. A battery as shown in Fig. 1 was prepared in which the positive electrode, separator, and electrolyte solution are identical with those in Comparative Example 1 and the negative electrode is the one which was prepared as mentioned above. This battery is designated as A113. This battery gave the result of cycle test at 60°C as shown in Table 1.

### Comparative Example 2

The same procedure as in Example 11 was repeated to prepare the negative electrode except that the zeolite was replaced by the one having a pore diameter of 0.7 nm. A cylindrical lithium secondary battery was prepared in which the positive electrode, separator, and electrolyte solution are identical with those in Example 11 but the negative electrode is the one prepared as mentioned above. This battery is designated as A2. This battery gave the result of cycle test at 60°C as shown in Table 1.

### Example 12

The same procedure as in Example 1 was repeated to prepare the positive electrode except that LiMn₂O₄ as the cathode active material was replaced by LiCoO₂ having an average particle diameter of 10 µm. The negative electrode was prepared in the following manner. A mixture was prepared from natural graphite powder (having an average particle diameter of 3 µm), activated carbon C4 (mentioned in Example 1), and polyvinylidene fluoride in a ratio of 87:3:10 by weight. This mixture was thoroughly mixed with 1-methyl-2-pyrrolidone as an organic solvent. In this way there was obtained a slurry for the negative electrode. This slurry was applied by doctor coating to copper foil (10 µm thick) as the current collector of the negative electrode. Coating was followed by drying at 100°C for 2 hours. The negative electrode measures 56 mm wide and 560 mm long. A cylindrical lithium secondary battery as shown in Fig. 1 was prepared in which the separator and electrolyte solution are identical with those in Example 1 and the positive and negative electrodes are those which were prepared as mentioned above. This battery is designated as A12. This battery has an average discharge voltage of 3.7 V and a rated capacity of 1.4 Ah add 5 Wh. This battery gave the result of cycle test at 60°C as shown in Table 1.

### Comparative Example 3

The same procedure as in Example 12 was repeated to prepare a cylindrical lithium secondary battery except that the capturing agent was not used and the negative electrode was replaced by the one explained below. A slurry for the negative electrode was prepared by mixing from natural graphite powder (having an average particle diameter of 3 µm) and polyvinylidene fluoride (dissolved in 1-methyl-2-pyrrolidone) in a ratio of 90:10 by weight. This slurry was applied by doctor coating to the surface of copper foil (10 µm thick) as the current collector of the negative electrode. The negative electrode measures 56 mm wide and 560 mm long. The coated negative electrode was dried at 100°C for 2 hours. The resulting battery is designated as B3. This battery gave the result of cycle test at 60°C as shown in Table 1.

### Example 13

The same procedure as in Example 1 was repeated to prepare the positive electrode except that LiMn₂O₄ as the cathode active material was replaced by LiNi_{0.8}Co_{0.2}O₂ having an average particle diameter of 10 µm. The negative electrode was prepared in the following manner. A mixture was prepared from natural graphite powder (having an average particle diameter of 3 µm), activated carbon C4 (mentioned in Example 1), and polyvinylidene fluoride in a ratio of 87:3:10 by weight. This mixture was thoroughly mixed with 1-methyl-2-pyrrolidone as an organic solvent. In this way there was obtained a slurry for the negative electrode. This slurry was applied by doctor coating to copper foil (10 µm thick) as the current collector of the negative electrode. Coating was followed by drying at 100°C for 2 hours. The negative electrode measures 56 mm wide and 560 mm long. A cylindrical lithium secondary battery as shown in Fig. 1 was prepared in which the separator and electrolyte solution are identical with those in Example 1 and the positive and negative electrodes are those which were prepared as mentioned above. This battery is designated as A13. This battery has an average discharge voltage of 3.6 V and a rated capacity of 1.6 Ah add 5.8 Wh. This battery gave the result of cycle test at 60°C as shown in Table 1.

### Comparative Example 4

The same procedure as in Example 13 was repeated to prepare a cylindrical lithium secondary battery except that the capturing agent was not used and the negative electrode was replaced by the one explained below. A slurry for the negative electrode was prepared by mixing from natural graphite powder (having an average particle diameter of 3 µm) and polyvinylidene fluoride (dissolved in 1-methyl-2-pyrrolidone) in a ratio of 90:10 by weight. This slurry was applied by doctor coating to the surface of copper foil (10 µm thick) as the current collector of the negative electrode. The negative electrode measures 56 mm wide and 560 mm long. The coated negative electrode was dried at 100°C for 2 hours. The resulting battery is designated as B4. This battery gave the result of cycle test at 60°C as shown in Table 1.

### Example 14

Charging and discharging tests were performed on batteries A301, A302, A303, A304, A305, A306, A307, A308, A309, A310, A311, A41, A42, A43, A44, A45, A46, A47, A48, A49, A410, A411, A412, A413, A414, A415, A416, A5, A6, A7, A81, A82, A83, A91, A92, A101, A102, A102, A103, A111, A112, and A113 in Examples 3, 4, 5, 6, 7, 8, 9, 10, and 11. Charging was carried out for 5 hours with a current of 0.3 A at a constant voltage, with the end voltage being 4.2 V. Discharging was carried out with a current of 0.3 A until the battery voltage reached 3.0 V. The ambient temperature for the test was 60°C. It was found that all the batteries according to the present invention decreased very little in the retention of capacity after repeated charging and discharging cycles. They retained 75-83% of the initial capacity even after 500 cycles of charging and discharging. This result is better than that of batteries B11, B12, and B2 in Comparative Examples 1 and 2.

### Example 15

Batteries B3 and B4 in Comparative Examples 3 and 4, in which the cathode active material is LiCoO₂ and LiNi_{0.8}Co_{0.2}O₂, respectively, decreased in the retention of capacity according as the number of cycles increased. Their capacity after 300 cycles decreased to about 70% of the initial capacity. By contrast, batteries A12 and A13 according to the present invention (which correspond to B3 and B4) decreased very little in the retention of capacity after repeated charging and discharging cycles. They retained 85-90% of the initial capacity even after 500 cycles of charging and discharging.

### Example 16

Four kinds of positive electrodes were prepared in the same way as in Example 1 except that LiMn₂O₄ was replaced by any of LiNiO₂, LiMnO₂, Fe₂(SO₄)₃, and LiFeO₂. Four kinds of cylindrical lithium secondary batteries as shown in Fig. 1 were prepared in which the positive electrode is the one specified above, the negative electrode is composed of amorphous carbon and activated carbon C3, and the separator is a polyethylene sheet (25 µm thick). These batteries underwent cycle test at 60°C. They retained 85-90% of the initial capacity after 300 cycles. This suggests that the capturing agent (activated carbon C4) according to the present invention is effective in improving the cycle life at high temperatures.

### Example 17

Batteries A11, A12, A13, A14, and A15 in Example 1 and batteries B11 and B12 in Comparative Example 1 were charged at 25°C up to the rated capacity under the charging condition mentioned in Example 2. The charged batteries were allowed to stand at 50°C for 30 days. The batteries were discharged at 25°C. The batteries underwent three charging and discharging cycles. Each battery was measured for discharge capacity. The capacity after standing was compared with the initial capacity (100%) before standing, so that the ratio of capacity recovery after standing was calculated. It was found that the ratio of capacity recovery of batteries A11, A12, A13, A14, and A15 in Example 1 was 92%, 93%, 93%, 95%, and 93%, respectively. By contrast, the ratio of capacity recovery of batteries B11 and B12 in Comparative Example 1 was 40% and 58%, respectively. The result in this example suggests that the capturing agent of activated carbon according to the present invention is effective in improving the retention characteristics of lithium secondary batteries at high temperatures.

### Example 18

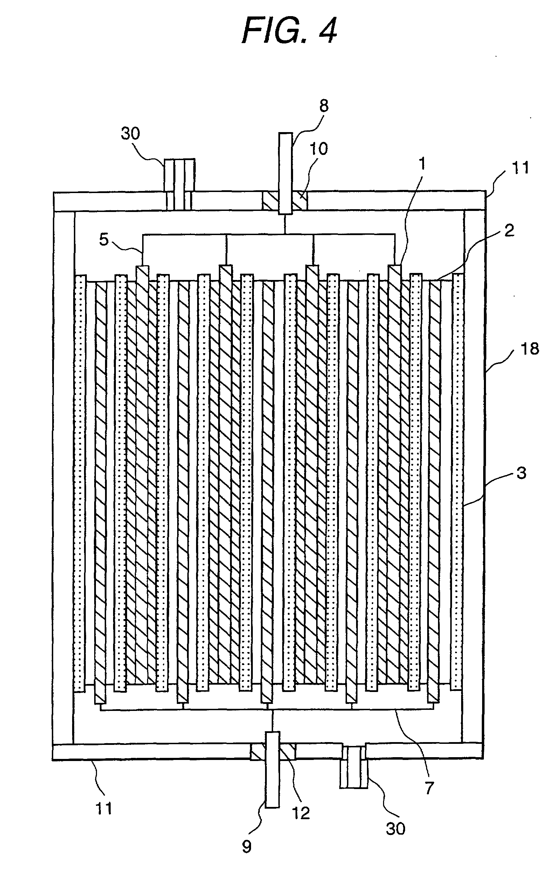

The same procedure as in Example 1 was repeated to prepare a positive electrode, 5000 mm long and 150 mm wide, and a negative electrode, 5100 mm long and 155 mm wide. The active material for the negative electrode has the same composition as that of battery A13 in Example 1. A cylindrical lithium secondary battery was prepared which has the sectional structure as shown in Fig. 4. The battery measures 200 mm high and 50 mm in diameter. The electrodes are of spiral type, with the positive electrode 1 and the negative electrode 2 separated by the separator 3. The separator used in this example is a porous polyethylene sheet, 40 µm thick, which has a pore diameter of 0.1-10 µm and a porosity of 40-50%. The electrodes have positive electrode leads 5 and negative electrode leads 7, which extend in opposite directions. Each electrode is provided with 10 belt-like leads. The positive electrode leads 5 and the negative electrode leads 9 are welded together to the cathode terminal 8 and anode terminal 9. The cathode terminal 8 and anode terminal 9 are fitted into the battery lid 11, with a polypropylene packing 12 interposed between them for insulation. The tubular aluminum battery can 18 and the battery lid 11 were welded together by laser. The battery can is filled with the electrolyte solution, with the safety valve 30 removed from the battery lid 11. (The safety valve functions both as a vent to release the internal pressure and as a stopper of the inlet for the electrolyte solution.) After that, the safety valve 30 is attached to the battery lid 11 so as to hermetically close the. battery. The vent is made up of two tubular parts and aluminum foil interposed between them. When the pressure in the battery reaches 3-7 atm, the aluminum foil ruptures to release the gas which has accumulated in the battery. The electrolyte solution used in this example is prepared by dissolving 1 mol of lithium borofluoride (LiBF₄) in one liter of ethylene carbonate and dimethyl carbonate mixed in equal volumes. Although the electrolyte was changed from LiPF₆ to LiBF₄ in this example, both produce the same effect as explained in the following. Another electrolyte or a mixture or two or more electrolytes also gives the same results.

The battery permits its electrochemical energy to be taken out from the cathode terminal 8 and the anode terminal 9, and it also stores energy by recharging. The battery has an average discharge voltage of 3.7 V and a rated capacity of 27 Ah and 100 Wh. The battery in this example is designated as A18.

### Example 19

Ninety-six lithium secondary batteries (A18) of the same specification as in Example 18 were produced. Twelve battery assemblies, each consisting of eight A18 batteries, were produced. A battery module consisting of these battery assemblies, connected in series, was mounted on the bottom of an electric car. The battery module is controlled by the accelerator pedal so that it supplies power to the drive motor. The electric car in this example is designated as E19.

### Comparative Example 5

The same procedure as in Comparative Example 1 was repeated to prepare cathode and anode active materials of the same composition as in those of battery B11. These active materials were used to prepare a positive electrode, 5000 mm long and 150 mm wide and a negative electrode, 5100 mm long and 155 mm wide. A cylindrical lithium secondary battery as shown in Fig. 4 was prepared in which the separator and electrolyte solution are those used in Comparative Example 1 and the positive and negative electrodes are those prepared as mentioned above. The battery measures 200 mm high and 50 mm in diameter. The electrolyte solution used in this example is prepared by dissolving 1 mol of lithium borofluoride (LiBF₄) in one liter of ethylene carbonate and dimethyl carbonate mixed in equal volumes. This battery has an average discharge voltage of 3.7 V and a rated capacity of 27 Ah and 100 Wh. The battery in this example is designated as B5.

### Comparative Example 6

A battery module of the same structure as in Example 18 was produced from batteries B5 in Comparative Example 5. This module was mounted on an electric car. The electric car in this comparative example is designated as F6.

### Example 20

The electric cars E19 and F5 were tested for traveling performance. The electric car marked a maximum travel distance of 200 km when the battery module 41 was charged once. The electric car E19, which is equipped with the battery module pertaining to the present invention, allowed its battery module to be charged and discharged 300 times before its maximum travel distance decreased below 160 km. By contrast, the electric car F5, which is equipped with the battery module in Comparative Example 5, allowed its battery module to be charged and discharged only 110 times before its maximum travel distance decreased below 160 km. The electric car E19 of the present invention is apparently superior. Incidentally, the battery of the present invention produced the same effect as above when it is amounted on a hybrid car which relies on both engine and battery.

### Example 21

Four sets of battery assemblies were produced, each set consisting of eight lithium secondary batteries A18 prepared in Example 18. These battery sets were connected in series to form a power source. This power source was mounted on a wheelchair for medical care. This wheelchair is designated as M21. A power source of the same structure as above was produced from 32 lithium secondary batteries B4 prepared in Comparative Example 4. This power source was mounted on a wheelchair for medical care. This wheelchair is designated as N21. The wheelchair, with its batteries 100% charged, was allowed to stand outdoors at 40°C so as to measure the ratio of self-discharge. The power source of the wheelchair M20 marked only 2% of self-discharge after standing for 30 days. By contrast, the power source on the wheelchair N21, which does not employ the batteries of the present invention, marked 20% of self-discharge after standing for 30 days. The result in this example indicates that the lithium secondary battery of the present invention has a low level of self-discharge even at high temperatures and hence has good durability.

### Example 22

Six units of battery A13 prepared in Example 1 were connected in series to produce a battery assembly. This battery assembly was mounted on a notebook computer equipped with a liquid-crystal full-color display. This notebook computer is designated as P1. Eight units of battery B11 prepared in Comparative Example 1 were connected in series to produce a battery assembly. This battery assembly was mounted on a notebook computer equipped with a liquid-crystal full-color display. This notebook computer is designated as P2. These two computers were used at an ambient temperature of 35°C. P1 decreased in operating time from 4 hours to 2 hours after use for 3 years, whereas P2 decreased in operating time from 4 hours to 2 hours after use for 1 year. When mounted on a personal computer, the lithium secondary battery of the present invention exhibits good durability for use in a high-temperature environment.

Lithium secondary batteries were prepared from the cathode active material, anode active material, electrolyte solution, and capturing agent in any of Examples 1, 3, 4, 5, 6, 7, 8, 9, 10, 11, 12, 13, 14, 15, and 16. The resulting batteries were used for portable telephones, small information terminals, video cameras, large-size computers, power tools, vacuum cleaners, air conditioners, game machines with a function of virtual reality, electric bicycle, caster walkers for medical care, movable beds for medical care, escalators, elevators, forklifts, golf carts, emergency power supplies, road conditioners, and power storage systems. As compared with the batteries not containing the capturing agent of the present invention, the batteries according to the present invention contribute more to the life of the above-listed machines and equipment used at high temperatures.

### ADVANTAGES OF THE INVENTION

As mentioned above, the present invention provides a lithium secondary battery which has a long life even in an environment at high temperatures owing to the capturing agent which removes impurities and by-products present in the lithium secondary battery. These impurities and by-products arise from metal ions leaching out of the positive electrode, battery can, and current collector, or hydrogen fluoride evolved by the electrolyte solution. The capturing agent may be incorporated into any of the positive electrode, negative electrode, separator, and electrolyte solution.

The present invention provides a lithium secondary battery which has a long life even in an environment at high temperatures.

## Claims

1. A lithium secondary battery comprising a cathode; an anode; and an electrolyte solution containing lithium ions, which comprises a capturing agent having a function to capture, by absorption, binding, or adsorption, impurities or by-products which are produced in said lithium secondary battery.

2. A lithium secondary battery comprising a cathode; an anode; an electrolyte solution containing lithium ions; and a separator, wherein any one of the cathode, the anode, the electrolyte solution containing lithium ions and the separator comprises a capturing agent having a function to capture, by absorption, binding, or adsorption, impurities or by-products which are produced in said lithium secondary battery.

3. A lithium secondary battery according to any one of claims 1 and 2, wherein the capturing agent captures, by absorption, binding, or adsorption, impurities or by-products containing cations.

4. A lithium secondary battery according to any one of claims 1 and 2, wherein the capturing agent captures, by absorption, binding, or adsorption, impurities or by-products containing fluoride ions.

5. A lithium secondary battery according to any one of claims 1 and 2, wherein the capturing agent captures, by absorption, binding, or adsorption, cobalt ions, nickel ions, manganese ions, copper ions, or aluminum ions.

6. A lithium secondary battery according to any one of claims 1, 2, 3, 4 and 5, wherein the capturing agent is an absorbent or adsorbent having a specific surface area no smaller than 1000 m²/g.

7. A lithium secondary battery according to any one of claims 1, 2, 3, 4 and 5, wherein the capturing agent is a carbonaceous material having pores or interstices.

8. A lithium secondary battery according to any one of claims 1, 2, 3, 4 and 5, wherein the capturing agent is an absorbent or adsorbent composed of an acicular or fibrous substance.

9. A lithium secondary battery according to any one of claims 1, 2, 3, 4 and 5, wherein the capturing agent contains a complexing agent and is fixed to the surface of carbon or separator by chemical bonding.

10. A lithium secondary battery according to any one of claims 1, 2, 3, 4 and 5, wherein the capturing agent contains one or more complexing agents or derivatives of said complexing agents selected from the group consisting of acetylacetone, ethylenediaminetetraacetic acid, 1,10-phenathroline, 1,2-bis-(diphenylsulfine)ethane, 2,2'-bipyridine, and phthalocyanine.

11. A lithium secondary battery according to any one of claims 1, 2, 3, 4 and 5, wherein the capturing agent contains at least one kind of element selected from the group consisting of alkali metal, alkaline earth metal, silicon, aluminum, and titanium.

12. A lithium secondary battery according to any one of claims 1, 2, 3, 4 and 10, wherein the capturing agent is a zeolite having a pore diameter of 0.3-0.5 nm.

13. A lithium secondary battery according to any one of claims 1, 2, 3, 4, 10 and 11, wherein the capturing agent has a porous surface or pore structure.

14. A lithium secondary battery according to any one of claims 1 and 3, wherein the capturing agent forms a salt with fluoride ions.

15. A lithium secondary battery according to any one of claims 1, 3 and 13, wherein the capturing agent contains at least one element selected from the group consisting of alkaline earth metal, silver, or tin.

16. A lithium secondary battery according to any one of claims 1, 2, 3, 4, 5, 6, 13, and 14, wherein the capturing agent is present in the cathode active material or anode active material or on the surface of the separator or the battery can wall.

17. A lithium secondary battery according to any one of claims 1, 2, 3, 4, 5, 6, 7, 8, 9, 10, 11, 12, 13, 14 and 15, wherein the capturing agent is contained in a solid electrolyte or gel electrolyte which permits lithium ions to permeate.

18. A lithium secondary battery system equipped with the lithium secondary battery according to any one of claims 1, 2, 3, 4, 5, 6, 7, 8, 9, 10, 11, 12, 13, 14, 15 and 16.

19. An electric vehicle comprising an electric power system having a lithium secondary battery; and an electric motor driven by electric energy supplied from said electric power system, wherein said lithium secondary battery is the lithium secondary battery according to any one of claims 1, 2, 3, 4, 5, 6, 7, 8, 9, 10, 11, 12, 13, 14, 15, 16 and 17.
